# FASCICULE DE BREVET EUROPEEN

(11) **EP 3 422 082 B1**
(45) Date de publication et mention de la délivrance du brevet: **13.04.2022**
(21) Numéro de dépôt: 18180239.8
(22) Date de dépôt: 27.06.2018
(51) Int. Cl.: G02B 27/01

(54) **UNITÉ DE PROJECTION D'IMAGES ADAPTÉE À RECEVOIR UNE LAME PARTIELLEMENT TRANSPARENTE, LAME PARTIELLEMENT TRANSPARENTE ET AFFICHEUR TÊTE HAUTE ASSOCIÉS**
BILDPROJEKTIONSEINHEIT, DIE FÜR DIE AUFNAHME EINER TEILWEISE TRANSPARENTEN OBERFLÄCHE ANGEPASST IST, ENTSPRECHENDE TEILWEISE TRANSPARENTE OBERFLÄCHE UND ENTSPRECHENDES HEAD-UP-DISPLAY
IMAGE PROJECTION UNIT SUITABLE FOR RECEIVING A PARTIALLY TRANSPARENT SLIDE, ASSOCIATED PARTIALLY TRANSPARENT SLIDE AND HEAD-UP DISPLAY

(30) Priorité: 27.06.2017 FR 1755862
(43) Date de publication de la demande: 02.01.2019
(73) Titulaire: Valeo Comfort and Driving Assistance, 94046 Créteil Cedex (FR)
(72) Inventeur: DELPIERRE, Laurent, 94046 Créteil CEDEX (FR); BOMBARD, Stéphane, 94046 Créteil CEDEX (FR); GRANDCLERC, François, 94046 Créteil CEDEX (FR)
(74) Mandataire: Delplanque, Arnaud

(56) Documents cités:
- EP-A1- 0 679 549
- WO-A1-2016/167687
- JP-A- H1 185 052
- US-A1- 2013 100 533

## Description

### DOMAINE TECHNIQUE AUQUEL SE RAPPORTE L'INVENTION

La présente invention concerne de manière générale le domaine des afficheurs tête haute pour véhicule.

Elle concerne plus particulièrement une unité de projection d'images pour afficheur tête haute telle que définie dans la revendication 1.

Elle concerne aussi une lame partiellement transparente correspondante telle que définie dans la revendication 8.

Elle concerne enfin un afficheur tête haute comportant une telle unité de projection d'images et une telle lame partiellement transparente.

Elle trouve une application particulièrement avantageuse dans la réalisation d'un afficheur tête haute comprenant une lame partiellement transparente fixe.

### ARRIERE-PLAN TECHNOLOGIQUE

Le principe des afficheurs tête haute pour véhicule est de projeter des images, notamment utiles à la conduite, directement dans le champ de vision d'un conducteur.

En général, les afficheurs tête haute comprennent une lame partiellement transparente placée dans le champ de vision du conducteur, et une unité de projection d'images formée, d'une part, par un dispositif de génération d'images adapté à générer des images, et, d'autre part, par un dispositif de renvoi d'images adapté à transmettre les images reçues du dispositif de génération d'images vers la lame partiellement transparente.

Il est connu d'intégrer l'unité de projection d'images à l'intérieur du tableau de bord ou juste au dessus de ce dernier, et de prévoir que la lame partiellement transparente fasse saillie au-dessus du tableau de bord, dans le champ de vision du conducteur.

Dans les afficheurs tête haute les plus simples, la lame partiellement transparente peut aussi être fixe par rapport à l'unité de projection de l'afficheur tête haute, toujours en position haute d'utilisation.

Dans ce dernier cas, il est connu de fixer la lame partiellement transparente dans le véhicule, par exemple en la fixant de manière définitive directement au parebrise, ou à proximité du parebrise, par exemple au tableau de bord ou encore à l'unité de projection.

Cependant, il est alors difficile de nettoyer le parebrise derrière la lame partiellement transparente fixe. En outre, la lame partiellement transparente risque d'être endommagée lors d'opérations de maintenance réalisées sur le véhicule.

Il est alors connu de monter la lame partiellement transparente de manière démontable dans le véhicule, par l'intermédiaire d'un porte-lame amovible dans lequel elle est fixée de manière permanente.

Cependant, ce type de montage nécessitant un porte lame complexifie la fabrication et l'assemblage de l'afficheur tête haute. Les documents WO 2016/167687 A1, EP 0 679 549 A1, US 2013/100533 A1, et JP H11 85052 montrent des lames amovibles.

### OBJET DE L'INVENTION

Afin de remédier à l'inconvénient précité de l'état de la technique, la présente invention propose une unité de projection d'images dans laquelle une lame partiellement transparente peut facilement être fixée ou démontée, sans nécessiter d'outils ni de pièce intermédiaire.

Plus particulièrement, on propose selon l'invention une unité de projection d'images telle que décrite en introduction, dans laquelle la pièce de support comprend en outre des moyens de coopération par encliquetage adaptés à coopérer avec des moyens complémentaires de coopération correspondants prévus dans ladite portion de montage de la lame partiellement transparente.

Ainsi, la pièce de support de l'unité de projection d'images est adaptée à recevoir facilement, par encliquetage, la lame partiellement transparente de manière à former un afficheur tête haute.

En outre, la pièce de support de l'unité de projection d'images peut autoriser un désengagement facile de la lame partiellement transparente, par simple traction. Le retrait facile de la lame partiellement transparente simplifie le nettoyage du parebrise et prévient l'endommagement de ladite lame lors d'opérations de maintien réalisées sur le véhicule.

Avantageusement, l'unité de projection d'images peut être livrée séparément de la lame partiellement transparente, et l'assemblage des deux pour former l'afficheur tête haute peut être réalisé postérieurement, ce qui prévient l'endommagement de ladite lame lors de son transport.

D'autres caractéristiques non limitatives et avantageuses du l'unité de projection d'images conforme à l'invention, prises individuellement ou selon toutes les combinaisons techniquement possibles, sont les suivantes :
- au moins une partie des moyens de coopération par encliquetage font saillie dans ledit interstice ;
- les moyens de coopération par encliquetage sont adaptés à coopérer directement avec les moyens de coopérations complémentaires correspondant de la lame partiellement transparente ;
- l'unité de projection d'images comporte en outre un boîtier de protection dans lequel sont disposés ledit dispositif de génération d'images et ledit dispositif de renvoi d'images, ladite pièce de support étant située sur ledit boîtier de protection, en saillie par rapport à une face supérieure dudit boîtier de protection ;
- au moins une partie desdits moyens de coopération par encliquetage sont portés par une région centrale d'au moins une desdites parois principales de la pièce de support ;
- les moyens de coopération par encliquetage de ladite pièce de support comportent une patte de maintien flexible dont l'extrémité libre est terminée par une dent de fixation adaptée à s'engager dans une encoche correspondante de ladite portion de montage de la lame partiellement transparente ;
- un axe de flexion de ladite patte de maintien flexible s'étend globalement parallèlement à un axe principal longitudinal d'extension dudit interstice de la pièce de support ;
- une section de ladite dent de fixation de la patte de maintien flexible présente un bord supérieur chanfreiné ;
- les moyens de coopération par encliquetage de ladite pièce de support comportent en outre un coulisseau de guidage adapté à s'engager dans un rail de guidage correspondant de ladite portion de montage de la lame partiellement transparente ;
- ladite dent de fixation fait saillie dans ledit interstice de la pièce de support ;
- ledit coulisseau de guidage s'étend selon un axe globalement perpendiculaire à un axe de flexion de ladite patte de maintien flexible des moyens de coopération par encliquetage ;
- ledit coulisseau de guidage fait saillie dans ledit interstice de la pièce de support ;
- les moyens de coopération par encliquetage comportent en outre, le long du bord libre d'au moins une des parois principales de ladite pièce de support délimitant en partie l'ouverture d'entrée dans ledit interstice, un bourrelet adapté à coopérer avec un décroché correspondant de ladite portion de montage de la lame partiellement transparente ;
- la face interne de chacune des parois principales de ladite pièce de support présente un rayon de courbure fini de sorte que l'interstice est adapté à recevoir la portion de montage d'une lame partiellement transparente dont chaque face présente le même rayon de courbure que la face interne de la paroi principale contre laquelle elle est destinée à s'accoler ;
- la dent de fixation de ladite patte de maintien flexible de la pièce de support présente un rayon de courbure fini, de sorte que la courbure de ladite dent de fixation est tournée dans le même sens que la courbure des faces internes desdites parois principales de la pièce de support ;
- la patte de maintien et le coulisseau de guidage sont portés par la même paroi principale de ladite pièce de support bordant l'interstice.

L'invention propose également une lame partiellement transparente associée à l'unité de projection d'images.

Une telle lame partiellement transparente comporte une portion de montage adaptée à s'engager dans un interstice d'une pièce de support d'une unité de projection d'images de sorte qu'une portion utile de ladite lame partiellement transparente puisse recevoir une image envoyée par ladite unité de projection d'images, au moins une des faces principales de ladite portion de montage de la lame partiellement transparente comportant des moyens complémentaires de coopération adaptés à coopérer avec des moyens de coopération par encliquetage correspondants de la pièce de support.

D'autres caractéristiques non limitatives et avantageuses de la lame partiellement transparente conforme à l'invention, prises individuellement ou selon toutes les combinaisons techniquement possibles, sont les suivantes :
- les moyens complémentaires de coopération comportent une encoche de réception adaptée à recevoir une dent de fixation correspondante portée par une extrémité libre d'une patte de maintien flexible de ladite pièce de support ;
- les moyens complémentaires de coopération comportent en outre un rail de guidage adapté à recevoir un coulisseau de guidage correspondant prévu dans ladite pièce de support ;
- ledit rail de guidage de la portion de montage s'étend globalement selon un axe perpendiculaire à l'axe d'extension de ladite encoche de réception ;
- les moyens complémentaires de coopération comportent en outre un décroché bordant ladite portion utile de la lame partiellement transparente, ledit décroché étant adapté à recevoir un bourrelet correspondant prévu dans ladite pièce de support ;
- ladite portion de montage s'étend dans le prolongement de ladite portion utile ;
- la portion utile est située dans une région supérieure de la lame partiellement transparente, tandis que la portion de montage est située dans une région inférieure de la lame partiellement transparente ;
- ladite portion de montage est d'une seule pièce avec ladite portion utile.

L'invention propose enfin un afficheur tête haute comportant une unité de projection d'images selon l'invention, et une lame partiellement transparente selon l'invention engagée dans l'interstice de ladite pièce de support de ladite unité de projection d'images et dont les moyens complémentaires de coopération sont encliquetés dans les moyens de coopération correspondants de ladite pièce de support.

D'autres caractéristiques non limitatives et avantageuses de l'afficheur tête haute conforme à l'invention, prises individuellement ou selon toutes les combinaisons techniquement possibles, sont les suivantes :
- lesdites parois principales de la pièce de support sont distantes l'une de l'autre d'une distance telle qu'elles sont adaptées à être à proximité directe de la lame partiellement transparente reçue dans ledit interstice ;
- une fois engagée dans ladite unité de projection d'images, la lame partiellement transparente est fixe dans l'afficheur tête haute, par rapport à ladite unité de projection d'images ;
- la lame partiellement transparente est adaptée à se désengager de ladite unité de projection d'images.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une représentation schématique d'un afficheur tête haute selon l'invention en position dans un véhicule ;
- la figure 2 est une représentation schématique d'une unité de projection d'images selon l'invention intégrée dans un boîtier de protection et recevant une lame partiellement transparente ;
- la figure 3 est une vue zoomée et en coupe dans le plan III de la pièce de support de l'unité de projection d'images de la figure 2, et de la lame partiellement transparente qu'elle reçoit ;
- la figure 4 est une représentation schématique de la lame partiellement transparente selon l'invention ;
- la figure 5 est une vue zoomée et en coupe dans le plan V de la lame partiellement transparente de la figure 4 ; et,
- la figure 6 est une représentation schématique d'un arraché de la pièce de support de l'unité de projection d'images de la figure 2.

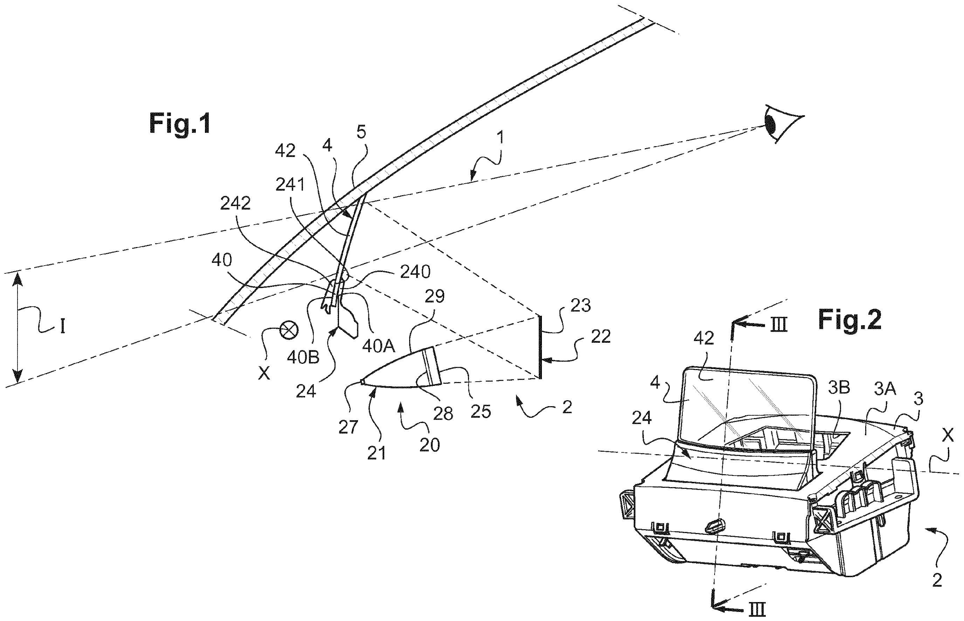

Sur la figure 1, on a représenté les éléments principaux d'un afficheur tête haute 1 destiné à équiper un véhicule, par exemple un véhicule automobile.

Un tel afficheur tête haute 1 est adapté à créer une image virtuelle I dans le champ de vision d'un conducteur du véhicule, de sorte que le conducteur puisse voir cette image virtuelle I et les informations éventuelles qu'elle contient sans avoir à détourner le regard.

A cet effet, l'afficheur tête haute 1 comprend une lame partiellement transparente 4 placée dans le champ de vision du conducteur et une unité de projection d'images 2 adaptée à générer une image et à l'envoyer en direction de ladite lame partiellement transparente 4.

Plus précisément, l'unité de projection d'images 2 comprend un dispositif de génération d'images 20, un dispositif de renvoi d'images 22 et une pièce de support 24 adaptée à recevoir une portion de montage 40 de la lame partiellement transparente 4. Le dispositif de génération d'images 20 est adapté à générer une image en direction du dispositif de renvoi d'images 22 lui-même adapté à transférer cette image vers la lame partiellement transparente 4.

De manière remarquable, et comme il sera expliqué plus en détails ci-après, la pièce de support 24 de l'unité de projection d'images 2 est adaptée à recevoir la portion de montage 40 de la lame partiellement transparente 4, grâce à des moyens de coopération par encliquetage portés par ladite pièce de support 24 et adaptés à coopérer avec des moyens complémentaires de coopération correspondants prévus dans ladite portion de montage 40 de la lame partiellement transparente 4.

Plus précisément, ici, la pièce de support 24 est adaptée à recevoir directement la portion de montage 40 de la lame partiellement transparente 4, et les moyens de coopération par encliquetage sont adaptés à coopérer directement avec des moyens complémentaires de coopération de ladite lame partiellement transparente 4.

Par « directement », on entend ici que la pièce de support 24 reçoit la lame partiellement transparente 4 sans nécessiter l'utilisation d'une pièce intermédiaire, tel qu'un porte lame, ni d'outils spécifiques. Par « directement », on entend aussi que la portion de montage 40 de la lame partiellement transparente 4 vient au contact de la pièce de support 24.

Ainsi, la lame partiellement transparente 4 est montée facilement dans l'unité de projection d'images 2 pour former l'afficheur tête haute 1. En outre, comme il ressort de la suite de la description, lorsque la lame partiellement transparente 4 est montée fixement dans l'afficheur tête haute 1, c'est-à-dire selon une position permanente d'utilisation, la pièce de support 24 autorise le démontage de ladite lame partiellement transparente 4 et sa séparation de l'unité de projection 2, ce qui facilite les opérations de nettoyage du parebrise 5 du véhicule et évite l'endommagement de la lame partiellement transparente 4 lors d'opérations de maintenance du véhicule.

Tel que représenté sur la figure 1, le dispositif de renvoi d'images 22 de l'unité de projection d'images 2 comprend un miroir de repliement 23. Ici, le miroir de repliement 23 est un miroir plan. En variante, le dispositif de renvoi d'images pourrait comprendre une pluralité de miroirs et/ou d'autres éléments optiques.

Tel que représenté sur la figure 1, le dispositif de génération d'images 20 de l'unité de projection d'images 2 comprend ici un écran 25 rétroéclairé par un module de rétroéclairage 21.

L'écran 25 est un écran à cristaux liquides (ou LCD pour "*Liquid Crystal Display"*), par exemple à transistors en couche mince (ou TFT pour *"Thin-Film Transisto*r").

Le module de rétroéclairage 21 comprend un ensemble de sources de lumière montées sur un support 27 ainsi qu'un réflecteur 29 associé à un diffuseur 28. Le diffuseur 28 est ici placé sur l'extrémité du réflecteur 29 recevant l'écran 25, et le support 27 des sources de lumière est placé sur l'extrémité opposée du réflecteur 29 de manière à ce que l'ensemble composé du support des sources 27 de lumière, du réflecteur 29, et du diffuseur 28 forme une enceinte fermée.

Les sources de lumière sont ici des diodes électroluminescentes (ou LED pour « Light Emitting Diode ») montées sur un circuit imprimé jouant le rôle de support 27.

Ces sources de lumière sont ici disposées selon une unique rangée d'une pluralité de sources de lumières comprenant par exemple cinq sources de lumière. En variante, elles pourraient en comprendre un nombre différent, par exemple un nombre compris entre 2 et 10.

Comme le montre la figure 1, la pièce de support 24 de l'unité de projection d'images 2 est adaptée à recevoir la portion de montage 40 de la lame partiellement transparente 4 de sorte qu'une portion utile 42 de ladite lame partiellement transparente 4 fasse saillie par rapport à un tableau de bord (non représenté) du véhicule automobile, à proximité du parebrise 5. Ici la portion utile 42 s'étend entre le parebrise 5 du véhicule et les yeux du conducteur, à proximité du parebrise 5.

Ici, la pièce de support 24 est fixe par rapport au véhicule. La position de la lame partiellement transparente 4 reçue dans ladite pièce de support 24 est ainsi une position permanente d'utilisation, elle-même fixe par rapport au véhicule.

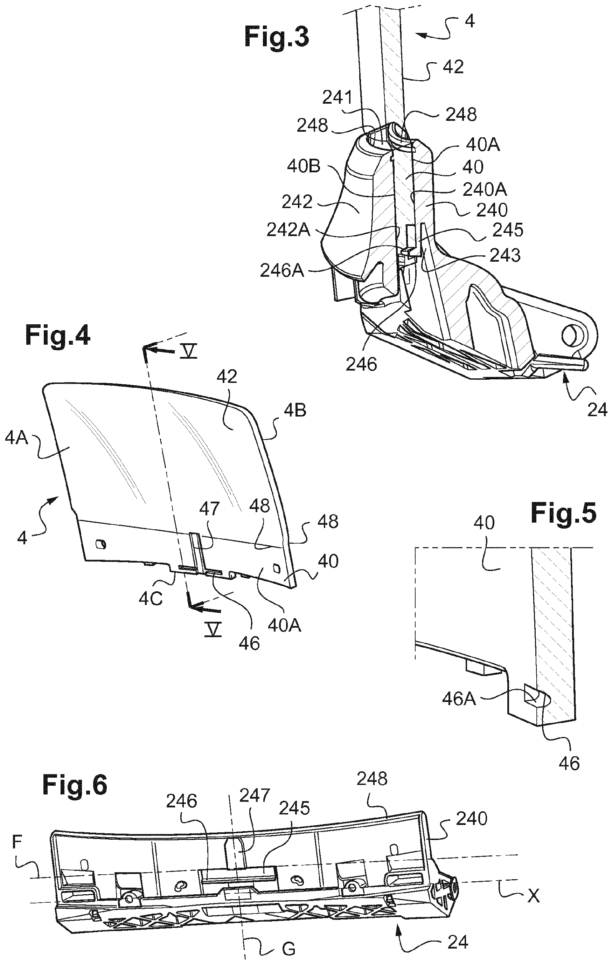

Comme le montrent bien les figures 1 et 3, la pièce de support 24 comporte deux parois principales 240, 242 s'étendant en vis-à-vis l'une de l'autre de manière à délimiter entre elles un interstice 241 adapté à recevoir ladite portion de montage 40 de la lame partiellement transparente 4.

Les parois principales 240, 242 de la pièce de support 24 sont distantes l'une de l'autre d'une distance telle que ledit interstice 241 présente une largeur égale, au jeu près, à l'épaisseur de la portion de montage 40 de la lame partiellement transparente 4.

Les parois principales 240, 242 de la pièce de support 24 sont ici portés par deux pièces distinctes rapportés l'une sur l'autre pour former la pièce de support 24.

Comme le montrent les figures 1 et 2, les parois principales 240, 242 de la pièce de support 24 s'étendent ici de manière continue, selon un axe d'extension principal longitudinal X globalement parallèle la direction transverse du véhicule s'étendant entre le côté gauche et le côté droit du véhicule. Bien entendu, l'interstice 241 qu'elles forment s'étend lui-même selon ledit axe d'extension principal longitudinal X.

De plus, ici, la face interne 240A, 242A de chacune des parois principales 240, 242 de ladite pièce de support 24 présente un rayon de courbure fini (voir figure 3). Ici, les faces internes 240A, 242A des parois principales 240, 242 présentent une concavité tournée dans le même sens, à savoir tournée vers le conducteur. L'interstice 241 est ainsi adapté à recevoir la portion de montage 40 incurvée de la lame partiellement transparente 4, chaque face 40A, 40B de ladite portion de montage 40 présentant le même rayon de courbure que la face interne 240A, 242A de la paroi principale 240, 242 contre laquelle elle doit s'accoler.

Par ailleurs, comme le montre la figure 2, il est envisageable que l'unité de projection d'images 2 comporte un boîtier de protection 3 dans lequel sont disposés ledit dispositif de génération d'images 20 et ledit dispositif de renvoi d'images 22. Le boîtier de protection 3 protège ainsi en partie les dispositifs de génération et de renvoi d'images 20, 22 contre les agressions extérieures telle que la poussière, l'humidité, ou encore les rayons lumineux parasites extérieurs au boîtier en partie responsables de la détérioration de la qualité de l'image vue par le conducteur. Ce boîtier de protection 3 peut être intégré dans le tableau de bord du véhicule automobile. La pièce de support 24 est située sur ledit boîtier de protection 3, en saillie par rapport à une face supérieure 3A dudit boîtier de protection 3 de sorte que la portion utile 42 de la lame partiellement transparente 4 s'étend alors à l'extérieur du boîtier de protection 3, dans le champ de vision du conducteur. Elle reçoit les images du dispositif de renvoi d'images 22 à travers une fenêtre de projection 3B, ici prévue sur une face supérieure 3A du boîtier de protection 3.

Comme le montrent les figures 1 et 3, une partie des moyens de coopération par encliquetage portés par la pièce de support 24 font ici saillie dans ledit interstice 241 pour coopérer avec la portion de montage 40 de la lame partiellement transparente 4.

En pratique, au moins une partie desdits moyens de coopération par encliquetage portés par la pièce de support 24 est située dans une région centrale d'au moins une desdites parois principales 240, 242 de la pièce de support 24.

Plus précisément, les moyens de coopération par encliquetage de ladite pièce de support 24 comportent ici une patte de maintien flexible 245 dont l'extrémité libre est terminée par une dent de fixation 246 qui fait saillie dans ledit interstice 241. La dent de fixation 246 est adaptée à s'engager dans une encoche 46 correspondante (mieux visible sur la figure 4) de ladite portion de montage 40 de la lame partiellement transparente 4 pour maintenir fermement la lame partiellement transparente 4 dans la pièce de support 24.

Comme le montre la figure 6, un axe de flexion F de ladite patte de maintien flexible 245 s'étend globalement parallèlement à l'axe d'extension principal longitudinal X dudit interstice 241 de la pièce de support 24.

Comme le montre la figure 3, la patte de maintien flexible 245 est ici formée dans l'épaisseur d'une des parois principales 240, de telle sorte qu'un espace libre 243 est ménagé entre ladite paroi principale 240 et la patte de maintien flexible 245.

Ainsi, lors de l'introduction de la lame partiellement transparente 4 dans l'interstice 241, un bord inférieur 4C de ladite lame partiellement transparente 4 rencontre la dent de fixation 246 et appuie sur cette dent de fixation 246 de sorte que la patte de maintien flexible 245 fléchit dans ledit espace libre 243. Puis la dent de fixation 246 s'engage dans ladite encoche 46 de la lame partiellement transparente 4 et la patte de maintien flexible 245 revient alors dans sa position de repos dans laquelle ladite dent de fixation 246 fait saillie dans ledit interstice 241.

Ici, et la dent de fixation 246 est portée par l'extrémité libre inférieure de la patte de maintien flexible 245.

La patte de maintien flexible 245 s'étend dans une région centrale d'une des parois principales 240 de la pièce de support 24. Dans l'exemple représenté, elle s'étend dans le tiers central de ladite paroi principale 240, selon la direction longitudinale et selon la direction verticale (voir figure 6).

Ici, la dent de fixation 246 et la patte de maintien flexible 245 de la pièce de support 24 présentent, comme les faces internes 240A, 242A des parois principales 240, 242, un rayon de courbure fini. La courbure de ladite dent de fixation 246 et de la patte de maintien flexible 245 est tournée dans le même sens que la courbure des faces internes 240A, 242A, desdites parois principales 240, 242 de la pièce de support 24.

Comme le montre la figure 3, la dent de fixation 246 présente une section dont un bord supérieur 246A est chanfreiné. Ce bord supérieur 246A chanfreiné permet à la dent de fixation 246 de se désengager de l'encoche 46 de la lame partiellement transparente 4 lorsqu'un utilisateur tire verticalement sur la lame partiellement transparente 4 pour la retirer de la pièce de support 24.

Comme le montre la figure 6, les moyens de coopération par encliquetage de ladite pièce de support 24 comportent en outre un coulisseau de guidage 247 faisant saillie dans ledit interstice 241.

Ledit coulisseau de guidage 247 est adapté à s'engager dans un rail de guidage 47 (voir figure 4) correspondant de ladite portion de montage 40 de la lame partiellement transparente 4.

Le coulisseau de guidage 247 s'étend selon un axe G globalement perpendiculaire audit axe de flexion F de ladite patte de maintien flexible 245.

Le coulisseau de guidage 247 sert de détrompeur pour s'assurer que la lame est introduite dans le bon sens dans la pièce de support 241. Il permet aussi de s'assurer que la lame partiellement transparente 4 est positionnée de manière optimale dans la pièce de support 24 de sorte que la dent de fixation 246 s'engage convenablement dans l'encoche 46 correspondante de ladite lame partiellement transparente 4.

Le coulisseau de guidage 247 est ici placé au-dessus de la patte de maintien flexible 245 de sorte que lorsque la lame partiellement transparente 4 est introduite dans la pièce de support 24, elle rencontre d'abord ledit coulisseau de guidage 247, puis la dent de fixation 246.

Ici, la patte de maintien flexible 245 et le coulisseau de guidage 247 sont portés par la même paroi principale 240 de ladite pièce de support 24. En variante, chacun de ces moyens de coopération pourrait respectivement être porté par une deux parois principales 240, 242.

Les moyens de coopération par encliquetage comportent en outre un bourrelet 248, le long du bord libre d'au moins une des parois principales 240, 242 de ladite pièce de support 24 (voir figure 3).

Ici, comme le montre la figure 3, les moyens de coopération comportent un bourrelet 248 le long du bord libre de chaque paroi principale 240, 242.

Chaque bourrelet 248 est adapté à coopérer avec un décroché 48 (voir figure 4) correspondant de ladite portion de montage 40 de la lame partiellement transparente 4.

Chaque bourrelet 248 permet de maintenir fermement la lame partiellement transparente 4 dans la pièce de support 24, et ce malgré les vibrations éventuelles subie par l'unité de projection d'images 2 lors du déplacement du véhicule.

Chaque bourrelet 248 permet aussi de fermer complètement l'accès à l'interstice 241 lorsque la lame partiellement transparente 4 est reçue dans la pièce de support 24.

La pièce de support 24 munie des moyens de coopération décrits cidessus permet un maintien optimal et direct de la lame partiellement transparente 4, sans nécessiter de pièce intermédiaire interposée entre ladite pièce de support 24 et la lame partiellement transparente 74, et sans nécessiter l'utilisation d'outils spécifiques pour fixer la lame dans ladite pièce de support 24.

La lame partiellement transparente 4 utilisée dans l'exemple de réalisation décrit ici est un combineur 4, par exemple une lame semi-transparente dédiée à l'afficheur tête haute 1.

La lame partiellement transparente 4 est par exemple réalisée par moulage, en un matériau polymère. Comme le montre la figure 4, elle présente deux faces principales 4A, 4B reliée par une épaisseur de matériau. Une des faces principales 4A, 4B est tournée vers le conducteur, l'autre vers le parebrise 5, lorsque la lame partiellement transparente est en position dans l'afficheur tête haute 1 dans le véhicule.

La lame partiellement transparente 4 présente une forme globalement rectangulaire, légèrement courbe, la courbure étant tournée vers le conducteur lorsque la lame partiellement transparente 4 est en position dans l'afficheur tête haute 1 dans le véhicule.

Comme le montre la figure 4, la portion de montage 40 s'étend dans le prolongement de la portion utile 42 de la lame partiellement transparente 4. En position d'utilisation dans l'afficheur tête haute 1 dans le véhicule, la portion utile 42 est située dans une région supérieure de la lame partiellement transparente 4, tandis que la portion de montage 40 est située dans une région inférieure de la lame partiellement transparente 4.

Plus précisément, la portion de montage 40 est formée dans le même matériau que la portion utile 42, lesdites portions de montage et utile 40, 42 formant ensemble une seule pièce. Par exemple, la portion de montage 40 vient de moulage avec la portion utile 42.

Les moyens complémentaires de coopération adaptés à coopérer avec les moyens de coopérations de la pièce de support 24 sont portés par au moins une des faces principales 4A, 4B de la lames partiellement transparente 4. Ici, les moyens complémentaires de coopération sont essentiellement portés par la face principale 4A tournée vers le conducteur.

En outre, comme le montre la figure 4, ces moyens complémentaires de coopération, à savoir l'encoche 46, le rail de guidage 47 et les décrochés 48, sont portés par la portion de montage 40.

Plus précisément, chaque face principale 4A, 4B de la lame partiellement transparente 4 porte un des décrochés 48 adaptés à coopérer avec les bourrelets 248 correspondants de la pièce de support 24. Les décrochés 48 forment la jonction entre lesdites portions de montage et utile 40, 42 de la lame partiellement transparente 4.

Le rail de guidage 47 et l'encoche 46 sont des découpes en creux par rapport aux faces principales 4A, 4B de la lame partiellement transparente 4. Ils sont perpendiculaires l'un par rapport à l'autre.

Le rail de guidage 47 est porté par une région centrale de la portion de montage 40. Il s'étend verticalement et débouche sur une région centrale du bord inférieur 4C de la lame partiellement transparente 4.

L'encoche 46 est portée par une région inférieure de la portion de montage 40. Elle s'étend ici longitudinalement, c'est-à-dire horizontalement le long de ladite région centrale du bord inférieur 4C de la lame partiellement transparente 4.

En outre, comme le montre plus précisément la figure 5, la partie supérieure 46A de l'encoche 46 est délimitée par un pan incliné adapté à s'accoler au bord supérieur 246A chanfreiné de la dent de fixation 46 de la pièce de support 24.

Comme expliqué précédemment, le montage de la lame partiellement transparente 4 dans la pièce de support 24 revient à orienter la lame partiellement transparente 4 avec la courbure orientée vers le conducteur, et la partie de montage 40 située vers le bas. La lame partiellement transparente 4 est ensuite insérée dans l'interstice 241, le coulisseau 247 de la pièce de support 24 s'engageant dans le rail de guidage 47. La lame partiellement transparente 4 coulisse alors dans l'interstice 241 et le bord inférieur 4C de la lame partiellement transparente 4 rencontre la dent de fixation 246, et impose à la patte de maintien flexible 245 de fléchir dans l'espace libre 243, puis la dent de fixation 246 s'engage dans l'encoche 46 de la lame partiellement transparente 4 et les bourrelets 248 de la pièce de support s'engagent dans les décrochés 48 correspondant de la lame partiellement transparente 4. La lame partiellement transparente 4 est alors fermement maintenue dans la pièce de support 24 et l'afficheur tête haute 1 est prêt à être utilisé.

Lorsque l'on souhaite retirer la lame partiellement transparente 4 de la pièce de support, il suffit d'exercer une traction verticale sur la lame. Le bord supérieur 246A chanfreiné de la dent de fixation 246 glisse le long du pan incliné 46A de l'encoche 46, et la patte de maintien flexible 245 est fléchie dans l'espace libre 243, de sorte que la dent de fixation 246 se désengage de l'encoche 46, et la lame peut être retirée de la pièce de support 24 sans encombre.

Le désengagement par traction de lame partiellement transparente 4 est également rendu possible par la forme courbe de la dent de fixation 246, de la patte de maintien flexible 245 et des faces principales 4A, 4B de la lame partiellement transparente 4.

Le montage et le démontage de la lame partiellement transparente 4 dans l'afficheur tête haute 1 sont très aisés grâce aux moyens de coopération prévus sur la pièce de support 24 et aux moyens complémentaires de coopération correspondant prévus sur la lame partiellement transparente 4.

Du fait de la simplicité de montage de la lame partiellement transparente 4, ladite lame partiellement transparente 4 n'a pas besoin d'être fixée à l'unité de projection d'images 2 au moment de la fabrication de l'afficheur tête haute 1. L'assemblage de l'afficheur tête haute 1 peut se faire postérieurement à sa fabrication.

Ainsi, la lame partiellement transparente 4 étant dissociée de l'unité de projection d'images 2, le volume global de l'afficheur tête haute 1 est nettement plus faible que lorsque la lame partiellement transparente 4 et l'unité de projection d'images 2 sont assemblées l'un à l'autre. Ceci est très avantageux en termes d'emballage et de transport. En outre, la lame, séparée de l'unité de projection d'images 2, risque moins d'être endommagée lors du transport puisqu'elle ne se trouve pas en porte à faux par rapport à l'unité de projection d'images 2.

## Revendications

1. Unité de projection d'images (2) pour afficheur tête haute (1), comportant, d'une part, un dispositif de génération d'images (20) et un dispositif de renvoi d'images (22), ledit dispositif de génération d'images (20) étant adapté à envoyer une image vers ledit dispositif de renvoi d'images (22), et, d'autre part, une pièce de support (24) adaptée à recevoir une portion de montage (40) d'une lame partiellement transparente (4) sur laquelle le dispositif de renvoi d'images (22) est adapté à projeter l'image, ladite pièce de support (24) comportant deux parois principales (240, 242) qui s'étendent en vis-à-vis l'une de l'autre de manière à délimiter entre elles un interstice (241) adapté à recevoir ladite portion de montage (40) de la lame partiellement transparente (4),
**caractérisée en ce que** la pièce de support (24) comprend en outre des moyens de coopération par encliquetage (245, 246, 247, 248) adaptés à coopérer avec des moyens complémentaires de coopération (46, 47, 48) correspondants prévus dans ladite portion de montage (40) de la lame partiellement transparente (4)
et laquelle au moins une partie desdits moyens de coopération par encliquetage (245, 246, 247) sont portés par une région centrale d'au moins une desdites parois principales (240, 242) de la pièce de support (24)
et dans laquelle les moyens de coopération par encliquetage de ladite pièce de support comportent une patte de maintien flexible (245) dont l'extrémité libre est terminée par une dent de fixation (246) adaptée à s'engager dans une encoche (46) correspondante de ladite portion de montage (40) de la lame partiellement transparente (4)
et dans laquelle les moyens de coopération par encliquetage de ladite pièce de support comportent en outre un coulisseau de guidage (247) adapté à s'engager dans un rail de guidage (47) correspondant de ladite portion de montage (40) de la lame partiellement transparente (4).

2. Unité de projection d'images (2) selon la revendication 1, comportant en outre un boîtier de protection (3) dans lequel sont disposés ledit dispositif de génération d'images (20) et ledit dispositif de renvoi d'images (22), ladite pièce de support (24) étant située sur ledit boîtier de protection (3), en saillie par rapport à une face supérieure (3A) dudit boîtier de protection (3).

3. Unité de projection d'images (2) selon l'une quelconque des revendications précédentes, dans laquelle un axe de flexion (F) de ladite patte de maintien flexible (245) s'étend globalement parallèlement à un axe d'extension principal longitudinal (X) dudit interstice (241) de la pièce de support (241).

4. Unité de projection d'images (2) selon l'une quelconque des revendications précédentes, dans laquelle une section de ladite dent de fixation (246) de la patte de maintien flexible (245) présente un bord supérieur (246A) chanfreiné.

5. Unité de projection d'images selon l'une quelconque des revendications précédentes, dans laquelle ledit coulisseau de guidage (247) s'étend selon un axe (G) globalement perpendiculaire à un axe de flexion (F) de ladite patte de maintien flexible (245) des moyens de coopération par encliquetage.

6. Unité de projection d'images (2) selon l'une des revendications 1 à 5, dans laquelle les moyens de coopération par encliquetage comportent en outre, le long du bord libre d'au moins une des parois principales (240, 242) de ladite pièce de support (24) délimitant en partie l'ouverture d'entrée dans ledit interstice (241), un bourrelet (248) adapté à coopérer avec un décroché (48) correspondant de ladite portion de montage (40) de la lame partiellement transparente (4).

7. Unité de projection d'images (2) selon l'une des revendications 1 à 6, dans laquelle la face interne (240A, 242A) de chacune des parois principales (240, 242) de ladite pièce de support (24) présente un rayon de courbure fini de sorte que l'interstice (241) est adapté à recevoir la portion de montage (40) d'une lame partiellement transparente (4) dont chaque face présente le même rayon de courbure que la face interne (240A, 242A) de la paroi principale (240, 242) contre laquelle elle est destinée à s'accoler.

8. Lame partiellement transparente (4) comportant une portion de montage (40) adaptée à s'engager dans un interstice (241) d'une pièce de support (24) d'une unité de projection d'images (2) de sorte qu'une portion utile (42) de ladite lame partiellement transparente (4) puisse recevoir une image envoyée par ladite unité de projection d'images (2),
au moins une des faces principales (40A, 40B) de ladite portion de montage (40) de la lame partiellement transparente (4) comportant des moyens complémentaires de coopération (46, 47, 48) adaptés à coopérer avec des moyens de coopération par encliquetage (245, 246, 247, 248) correspondants de la pièce de support (24) et dans laquelle les moyens complémentaires de coopération comportent en outre un rail de guidage (47) adapté à recevoir un coulisseau de guidage (247) correspondant prévu dans ladite pièce de support (24).

9. Lame partiellement transparente (4) selon la revendication 8, dans laquelle les moyens complémentaires de coopération comportent une encoche (46) de réception adaptée à recevoir une dent de fixation (246) correspondante portée par une extrémité libre d'une patte de maintien flexible (245) de ladite pièce de support (24).

10. Lame partiellement transparente (4) selon la revendication 8 prise dans la dépendance de la revendication 9, dans laquelle ledit rail de guidage (47) de la portion de montage (40) s'étend globalement selon un axe perpendiculaire à l'axe d'extension de ladite encoche (46) de réception.

11. Lame partiellement transparente (4) selon l'une des revendications 8 à 10, dans laquelle les moyens complémentaires de coopération comportent en outre un décroché (48) bordant ladite portion utile (40) de la lame partiellement transparente (4), ledit décroché (48) étant adapté à recevoir un bourrelet (248) correspondant prévu dans ladite pièce de support (24).

12. Afficheur tête haute (1) comportant une unité de projection d'images (2) selon l'une des revendications 1 à 7, et une lame partiellement transparente (4) selon l'une des revendications 8 à 11 engagée dans l'interstice (241) de ladite pièce de support (24) de ladite unité de projection d'images (2) et dont les moyens complémentaires de coopération (46, 47, 48) sont encliquetés dans les moyens de coopération (245, 246, 247, 248) correspondants de ladite pièce de support (24).

## Patentansprüche

1. Bildprojektionseinheit (2) für Head-up-Display (1), aufweisend einerseits eine Bilderzeugungsvorrichtung (20) und eine Bildumlenkvorrichtung (22), wobei die Bilderzeugungsvorrichtung (20) geeignet ist, ein Bild zur Bildumlenkvorrichtung (22) zu senden, und andererseits ein Trägerteil (24), das geeignet ist, einen Anbringungsabschnitt (40) einer teilweise transparenten Scheibe (4) aufzunehmen, auf welche die Bildumlenkvorrichtung (22) geeignet ist, das Bild zu projizieren, wobei das Trägerteil (24) zwei Hauptwandungen (240, 242) aufweist, die sich einander gegenüberliegend so erstrecken, dass sie zwischen ihnen einen Zwischenraum (241) begrenzen, der geeignet ist, den Anbringungsabschnitt (40) der teilweise transparenten Scheibe (4) aufzunehmen,
**dadurch gekennzeichnet, dass** das Trägerteil (24) ferner Mittel zum Zusammenwirken durch Verrastung (245, 246, 247, 248) umfasst, die geeignet sind, mit entsprechenden ergänzenden Zusammenwirkungsmitteln (46, 47, 48) zusammenzuwirken, die im Anbringungsabschnitt (40) der teilweise transparenten Scheibe (4) vorgesehen sind und wobei wenigstens eine Abschnitt der Mittel zum Zusammenwirken durch Verrastung (245, 246, 247) von einem Mittelbereich mindestens einer der Hauptwandungen (240, 242) des Trägerteils (24) getragen werden und wobei die Mittel zum Zusammenwirken durch Verrastung des Trägerteils einen flexiblen Halteansatz (245) aufweisen, dessen freies Ende von einem Befestigungszahn (246) abgeschlossen ist, der geeignet ist, in eine entsprechende Rille (46) des Anbringungsabschnitts (40) der teilweise transparenten Scheibe (4) einzugreifen und wobei die Mittel zum Zusammenwirken durch Verrastung des Trägerteils ferner einen Führungsschieber (247) aufweisen, der geeignet ist, in eine entsprechende Führungsschiene (47) des Anbringungsabschnitts (40) der teilweise transparenten Scheibe (4) einzugreifen.

2. Bildprojektionseinheit (2) nach Anspruch 1, ferner aufweisend ein Schutzgehäuse (3), in dem die Bilderzeugungsvorrichtung (20) und die Bildumlenkvorrichtung (22) angeordnet sind, wobei sich das Trägerteil (24) auf dem Schutzgehäuse (3) bezogen auf eine Oberseite (3A) des Schutzgehäuses (3) hervorstehend befindet.

3. Bildprojektionseinheit (2) nach einem der vorhergehenden Ansprüche, wobei sich eine Biegeachse (F) des flexiblen Halteansatzes (245) insgesamt parallel zu einer längsverlaufenden Haupterstreckungsachse (X) des Zwischenraums (241) des Trägerteils (241) erstreckt.

4. Bildprojektionseinheit (2) nach einem der vorhergehenden Ansprüche, wobei ein Teilabschnitt des Befestigungszahns (246) des flexiblen Halteansatzes (245) eine abgeschrägte Oberkante (246A) aufweist.

5. Bildprojektionseinheit nach einem der vorhergehenden Ansprüche, wobei sich der Führungsschieber (247) gemäß einer Achse (G) erstreckt, die insgesamt senkrecht zu einer Biegeachse (F) des flexiblen Halteansatzes (245) der Mittel zum Zusammenwirken durch Verrastung verläuft.

6. Bildprojektionseinheit (2) nach einem der Ansprüche 1 bis 5, wobei die Mittel zum Zusammenwirken durch Verrastung ferner entlang dem freien Rand mindestens einer der Hauptwandungen (240, 242) des Trägerteils (24), die die Eintrittsöffnung in den Zwischenraum (241) teilweise begrenzen, einen Wulst (248) aufweisen, der geeignet ist, mit einem entsprechenden Absatz (48) des Anbringungsabschnitts (40) der teilweise transparenten Scheibe (4) zusammenzuwirken.

7. Bildprojektionseinheit (2) nach einem der Ansprüche 1 bis 6, wobei die Innenfläche (240A, 242A) jeder der Hauptwandungen (240, 242) des Trägerteils (24) einen endlichen Krümmungsradius aufweist, so dass der Zwischenraum (241) geeignet ist, den Anbringungsabschnitt (40) einer teilweise transparenten Scheibe (4) aufzunehmen, von welchem jede Fläche denselben Krümmungsradius wie die Innenfläche (240A, 242A) der Hauptwandung (240, 242) aufweist, an die sie angefügt sein soll.

8. Teilweise transparente Scheibe (4) mit einem Anbringungsabschnitt (40), der geeignet ist, in einen Zwischenraum (241) eines Trägerteils (24) einer Bildprojektionseinheit (2) einzugreifen, so dass ein Nutzabschnitt (42) der teilweise transparenten Scheibe (4) ein Bild empfangen kann, das von der Bildprojektionseinheit (2) gesendet wird,
wobei mindestens eine der Hauptflächen (40A, 40B) des Anbringungsabschnitts (40) der teilweise transparenten Scheibe (4) ergänzende Zusammenwirkungsmittel (46, 47, 48) aufweist, die geeignet sind, mit entsprechenden Mitteln zum Zusammenwirken durch Verrastung (245, 246, 247, 248) des Trägerteils (24) zusammenzuwirken, und wobei die ergänzenden Zusammenwirkungsmittel ferner eine Führungsschiene (47) aufweisen, die geeignet ist, einen entsprechenden Führungsschieber (247) aufzunehmen, der im Trägerteil (24) vorgesehen ist.

9. Teilweise transparente Scheibe (4) nach Anspruch 8, wobei die ergänzenden Zusammenwirkungsmittel eine Aufnahmerille (46) aufweisen, die geeignet ist, einen entsprechenden Befestigungszahn (246) aufzunehmen, der von einem freien Ende eines flexiblen Halteansatzes (245) des Trägerteils (24) getragen wird.

10. Teilweise transparente Scheibe (4) nach Anspruch 8 in Abhängigkeit von Anspruch 9, wobei sich die Führungsschiene (47) des Anbringungsabschnitts (40) insgesamt gemäß einer Achse erstreckt, die senkrecht zur Erstreckungsachse der Aufnahmerille (46) verläuft.

11. Teilweise transparente Scheibe (4) nach einem der Ansprüche 8 bis 10, wobei die ergänzenden Zusammenwirkungsmittel ferner einen Absatz (48) aufweisen, der an den Nutzabschnitt (40) der teilweise transparenten Scheibe (4) angrenzt, wobei der Absatz (48) geeignet ist, einen entsprechenden Wulst (248) aufzunehmen, der im Trägerteil (24) vorgesehen ist.

12. Head-up-Display (1) aufweisend eine Bildprojektionseinheit (2) nach einem der Ansprüche 1 bis 7 und eine teilweise transparente Scheibe (4) nach einem der Ansprüche 8 bis 11, die in den Zwischenraum (241) des Trägerteils (24) der Bildprojektionseinheit (2) eingesetzt ist und deren ergänzende Zusammenwirkungsmittel (46, 47, 48) in die entsprechenden Zusammenwirkungsmittel (245, 246, 247, 248) des Trägerteils (24) eingerastet sind.

## Claims

1. Image projection unit (2) for a head-up display (1), comprising, on the one hand, an image generation device (20) and an image returning device (22), said image generation device (20) being designed to send an image to said image returning device (22), and, on the other hand, a support piece (24) designed to receive a mounting portion (40) of a partially transparent slide (4) onto which the image returning device (22) is designed to project the image, said support piece (24) comprising two main walls (240, 242) which extend opposite one another so as to delimited between them a gap (241) designed to receive said mounting portion (40) of the partially transparent slide (4),
**characterized in that** the support piece (24) further comprises snap-fitting cooperation means (245, 246, 247, 248) designed to cooperate with corresponding complementary cooperation means (46, 47, 48) provided in said mounting portion (40) of the partially transparent slide (4)
and wherein at least a part of said snap-fitting cooperation means (245, 246, 247) are borne by a central region of at least one of said main walls (240, 242) of the support piece (24)
and wherein the snap-fitting cooperation means of said support piece comprise a flexible securing lug (245), the free end of which is terminated by a fixing tooth (246) designed to be fitted into a corresponding notch (46) of said mounting portion (40) of the partially transparent slide (4)
and wherein the snap-fitting cooperation means of said support piece further comprise a guiding runner (247) designed to be fitted into a corresponding guiding rail (47) of said mounting portion (40) of the partially transparent slide (4).

2. Image projection unit (2) according to Claim 1, further comprising a protection housing (3) in which said image generation device (20) and said image returning device (22) are arranged, said support piece (24) being situated on said protection housing (3), protruding with respect to a top face (3A) of said protection housing (3) .

3. Image projection unit (2) according to either one of the preceding claims, wherein a bending axis (F) of said flexible securing lug (245) extends overall parallel to a main axis of longitudinal extension (X) of said gap (241) of the support piece (241).

4. Image projection unit (2) according to any one of the preceding claims, wherein a section of said fixing tooth (246) of the flexible securing lug (245) has a chamfered top edge (246A).

5. Image projection unit (2) according to any one of the preceding claims, wherein said guiding runner (247) extends on an axis (G) that is overall at right angles to a bending axis (F) of said flexible securing lug (245) of the snap-fitting cooperation means.

6. Image projection unit (2) according to one of Claims 1 to 5, wherein the snap-fitting cooperation means further comprise, along the free edge of at least one of the main walls (240, 242) of said support piece (24) partly delimiting the input aperture in said gap (241), a bead (248) designed to cooperate with a corresponding break (48) of said mounting portion (40) of the partially transparent slide (4).

7. Image projection unit (2) according to one of Claims 1 to 6, wherein the inner face (240A, 242A) of each of the main walls (240, 242) of said support piece (24) has a finished radius of curvature such that the gap (241) is designed to receive the mounting portion (40) of a partially transparent slide (4), each face of which has the same radius of curvature as the inner face (240A, 242A) of the main wall (240, 242) against which it is intended to be attached.

8. Partially transparent slide (4) comprising a mounting portion (40) designed to be fitted into a gap (241) of a support piece (24) of an image projection unit (2) such that a useful portion (42) of said partially transparent slide (4) can receive an image sent by said image projection unit (2),
at least one of the main faces (40A, 40B) of said mounting portion (40) of the partially transparent slide (4) comprising complementary cooperation means (46, 47, 48) designed to cooperate with corresponding snap-fitting cooperation means (245, 246, 247, 248) of the support piece (24) and wherein the complementary cooperation means further comprise a guiding rail (47) designed to receive a corresponding guiding runner (247) provided in said support piece (24).

9. Partially transparent slide (4) according to Claim 8, wherein the complementary cooperation means comprise a reception notch (46) designed to receive a corresponding fixing tooth (246) borne by a free end of a flexible securing lug (245) of said support piece (24).

10. Partially transparent slide (4) according to Claim 8 taken as dependent on Claim 9, wherein said guiding rail (47) of the mounting portion (40) extends overall on an axis at right angles to the axis of extension of said reception notch (46).

11. Partially transparent slide (4) according to one of Claims 8 to 10, wherein the complementary cooperation means further comprise a break (48) bordering said useful portion (40) of the partially transparent slide (4), said break (48) being designed to receive a corresponding bead (248) provided in said support piece (24).

12. Head-up display (1) comprising an image projection unit (2) according to one of Claims 1 to 7, and a partially transparent slide (4) according to one of Claims 8 to 11 fitted into the gap (241) of said support piece (24) of said image projection unit (2) and of which the complementary cooperation means (46, 47, 48) are snap fitted into the corresponding cooperation means (245, 246, 247, 248) of said support piece (24).
